# FASCICULE DE BREVET EUROPEEN

(11) **EP 4 375 809 B1**
(45) Date de publication et mention de la délivrance du brevet: **26.08.2026**
(21) Numéro de dépôt: 22208924.5
(22) Date de dépôt: 22.11.2022
(51) Int. Cl.: G06F 3/02

(54) **CLAVIER ALPHABÉTIQUE**
ALPHABETISCHER TASTATUR
ALPHABETIC KEYBOARD

(43) Date de publication de la demande: 29.05.2024
(73) Titulaire: Gallien, Laurent, 1264 St-Cergue (CH)
(72) Inventeur: Gallien, Laurent, 1264 St-Cergue (CH)
(74) Mandataire: Micheli & Cie SA

(56) Documents cités:
- US-A1- 2004 037 605
- US-A1- 2010 271 241
- US-A1- 2019 187 891

## Description

La présente invention concerne un clavier alphabétique. La présente invention concerne en particulier un clavier alphabétique dont les touches sont disposées de manière à faciliter le repérage des lettres et l'apprentissage de la frappe.

Un clavier alphabétique est une interface homme/machine permettant de sélectionner des lettres en actionnant des touches physiques ou virtuelles afin par exemple de convertir ces lettres en données informatiques pour les transmettre à un appareil électronique, typiquement dans le cas d'un clavier d'ordinateur, ou de les imprimer directement sur papier, par exemple dans le cas d'un clavier de machine à écrire.

La disposition des touches alphabétiques de la plupart des claviers correspond à des standards qui se sont répandus selon les pays et/ou les régions linguistiques, et dont les raisons ayant conduit à leur élaboration ne sont souvent plus d'actualité. La disposition QWERTY pour l'alphabet latin, par exemple, a été imaginée au XIXe siècle par l'inventeur américain Christopher Latham Soles. Une hypothèse très répandue est que cette disposition des lettres répond aux contraintes mécaniques de la première machine à écrire de Sholes : les touches correspondant aux paires de lettres les plus utilisées dans la langue anglaise sont réparties de manière à éloigner le plus possible les marteaux qui leur correspondent, limitant ainsi les risques de blocage des tiges. Cette disposition et ses variantes régionales, par exemple les dispositions AZERTY en France et QWERTZ dans les pays germanophones, se sont largement imposées pour les claviers de machines à écrire et ont été reprises pour les claviers d'ordinateurs à l'apparition de ceux-ci. Ces dispositions des touches alphabétiques ne sont pourtant pas intuitives et ne correspondent à aucun autre ordre connu des lettres de l'alphabet latin. Elles nécessitent donc un apprentissage spécifique pour être maîtrisées, faute de quoi les utilisateurs utilisent leur clavier d'une seule main, voire d'un ou deux doigts, tout en cherchant régulièrement les lettres.

Par ailleurs, la multiplication des appareils électroniques ayant un clavier virtuel ou un clavier physique spécifique, par exemple les smartphones, les consoles de jeu, les caisses automatiques, les parcmètres, etc., a amené une diversification de la disposition des touches alphabétiques. Cela engendre une certaine confusion chez les utilisateurs qui passent régulièrement d'un dispositif à un autre, certains de ces claviers étant parfois fastidieux à utiliser tant la disposition des lettres semble ne répondre à aucune logique.

Le document US 2004/037605 A1 décrit un clavier dont les touches correspondant à l'alphabet latin sont disposées de gauche à droite par ordre alphabétique, une nouvelle rangée étant initiée à chaque voyelle. Les rangées sont réparties en deux blocs de touches. Cette répartition permet de retrouver facilement une lettre, mais n'est pas ergonomique, en particulier pour une frappe à deux mains.

Le document US 2019/0187891 A1 décrit un clavier dont les touches correspondant aux voyelles sont arrangées au centre du clavier. Les touches correspondant aux consonnes sont réparties par ordre alphabétique autour des voyelles, mais il n'y a aucune suite logique entre les voyelles et les consonnes, ce qui rend difficile le repérage d'une touche particulière.

Le document US 2010/0271241 A1 décrit divers arrangements non conventionnels pour les touches d'un clavier, dans lesquels les touches correspondant aux voyelles sont généralement au centre et les touches correspondant aux consonnes sont disposées à la suite. Les dispositions proposées sont cependant relativement complexes et très différentes de celles des claviers traditionnels.

Un but de l'invention est donc de proposer un clavier alphabétique dont la disposition des touches alphabétiques correspondant aux lettres de l'alphabet latin de base est claire et logique.

Un autre but de l'invention est de proposer un clavier alphabétique dont la disposition des touches alphabétiques correspondant aux lettres de l'alphabet latin de base est facile à appréhender, permettant ainsi une phase d'apprentissage très courte et une utilisation rapidement aisée du clavier.

Ces buts et d'autres avantages sont atteints par un clavier alphabétique selon la revendication indépendante.

Ces buts et d'autres avantages sont atteints en particulier par un clavier alphabétique comprenant vingt-six touches alphabétiques, chaque touche alphabétique correspondant à une lettre de l'alphabet latin de base, dans lequel les touches alphabétiques sont arrangées en six séquences alphabétiques, chaque séquence alphabétique commençant par une voyelle de l'alphabet latin, suivie, dans l'ordre alphabétique, des consonnes séparant la voyelle initiale de la prochaine voyelle de l'alphabet ou de la fin de l'alphabet, les touches alphabétiques correspondant aux voyelles étant disposées sur des touches adjacentes entre elles.

La disposition des touches en séquences alphabétiques et le regroupement des voyelles sur des touches adjacentes entre elles permet de repérer rapidement le groupe des voyelles, qui est de préférence au centre du clavier, et, à partir des voyelles, de retrouver les consonnes qui sont disposées dans l'ordre alphabétique à parti des voyelles.

Les séquences alphabétiques sont de préférence réparties selon l'ordre alphabétique, la première séquence de l'alphabet étant contigüe à la deuxième, etc. Cela permet un repérage des lettres encore facilité.

Les vingt-six touches alphabétiques sont par exemple disposées sur trois rangées de touches adjacentes du clavier, chaque rangée de touche comprenant les touches alphabétiques correspondant aux lettres de deux séquences alphabétiques.

Les touches alphabétiques sont par exemple disposées : sur une première rangée des trois rangées de touches selon l'ordre des lettres suivant : H, G, F, E, A, B, C, D ; sur une deuxième rangée des trois rangées de touches immédiatement sous la première rangée selon l'ordre suivant : T, S, R, Q, P, O, I, J, K, L, M, N ; sur une troisième rangée des trois rangées de touches immédiatement sous la deuxième rangée selon l'ordre suivant : Z, Y, U, V, W, X.

Cette disposition offre une répartition quasi symétrique des touches alphabétiques et regroupe aux extrémités de la rangée centrale les touches alphabétiques correspondant aux lettres T, S, R et L, M, N qui sont parmi les plus usitées dans plusieurs langues européennes.

Le clavier alphabétique de l'invention peut en outre comprendre des touches supplémentaires correspondant à des chiffres, des caractères spéciaux, des commandes et/ou des éléments de ponctuation afin de constituer par exemple un clavier d'ordinateur ou de machine à écrire complet.

Les touches sont agencées par exemple en quinconce ou en matrice, ou selon toute disposition géométrique appropriée.

Selon certaines formes d'exécution, les touches correspondant aux voyelles sont espacées des autres touches alphabétiques, ce qui permet un repérage encore facilité des lettres, en particulier des voyelles.

Le clavier alphabétique de l'invention est par exemple un clavier d'ordinateur physique ou un clavier virtuel.

La présente invention sera mieux comprise à la lecture de la description ci-dessous illustrée par les figures, où :
- la figure 1 illustre schématiquement un clavier alphabétique matriciel selon une forme d'exécution de l'invention :
- la figure 2 illustre schématiquement une variante du clavier alphabétique de la figure 1 dans lequel les touches sont disposées en quinconce ;
- la figure 3 illustre schématiquement une variante du clavier alphabétique de la figure 1 dans lequel les colonnes comprenant les touches correspondant aux voyelles sont espacées des autres colonnes adjacentes.

En référence aux figures, le clavier alphabétique 1 de l'invention est destiné à être utilisé comme interface pour tout appareil fonctionnant ou pouvant fonctionner avec un clavier alphabétique ou alphanumérique physique ou virtuel. Le clavier 1 de l'invention peut prendre toute forme technique appropriée afin de convertir l'activation d'une touche par un utilisateur en un signal informatique ou mécanique représentatif du caractère, alphabétique ou non, correspondant à la touche activée.

Selon certaines formes d'exécution, le clavier 1 de l'invention est un clavier physique, par exemple un clavier de machine à écrire, un clavier d'ordinateur indépendant destiné à être connecté avec ou sans fil à un ordinateur ou à tout autre appareil électronique ayant une interface adaptée, un clavier d'ordinateur intégré à un appareil électronique fixe ou portatif, par exemple à une caisse de parking, à un ordinateur portable ou à un agenda électronique, ou toute autre forme de clavier physique. Selon d'autre formes d'exécution, le clavier 1 de l'invention est un clavier virtuel affiché par exemple sur l'écran, tactile ou non, d'un appareil électronique fixe ou portatif, par exemple d'un parcmètre, d'une caisse de parking, d'une télévision, d'un smartphone, d'une tablette, d'un appareil GPS, etc., un clavier virtuel projeté sur une surface, ou toute autre forme de clavier virtuel.

Le clavier 1 de l'invention comprend au moins vingt-six touches alphabétiques 10 correspondant aux vingt-six lettres de l'alphabet latin de base A, B, C, D, E, F, G, H, I, J, K, L, M, N, O, P, Q, R, S, T, U, V, W, X, Y, Z. Le clavier 1 comprend optionnellement des touches supplémentaires 2 illustrées de manière schématique sur les figures, dont le nombre et la nature dépendent généralement de plusieurs paramètres, par exemple l'usage prévu du clavier 1, la taille du clavier 1, la nature virtuelle ou physique du clavier 1, le design du clavier 1, etc. Les touches supplémentaires 2 comprennent par exemple des touches correspondant à des éléments de contrôle (espace, entrée, échappement, etc.), à des caractères de ponctuation et/ou à des caractères spéciaux. En fonction de la langue et/ou de la région auxquelles le clavier 1 est destiné, les touches supplémentaires 2 comprennent par exemple des touches correspondant à des accents et/ou à des lettres supplémentaires. Les touches supplémentaires 2 sont de préférence disposées à la périphérie de l'ensemble formé par les touches alphabétiques 10 de base.

Selon l'invention, les touches alphabétiques 10 sont disposées sur le clavier 1 de manière à ce que les lettres correspondantes forment des séquences alphabétiques 31, 32, 33, 34, 35, 36. Chaque séquence alphabétique 31, 32, 33, 34, 35, 36 commence par une des voyelles A, E, I, O, U et Y de l'alphabet latin de base. La voyelle initiale de chaque séquence alphabétique 31, 32, 33, 34, 35, 36 est suivie des consonnes, dans l'ordre alphabétique, séparant la voyelle initiale de la prochaine voyelle de l'alphabet, ou de la fin de l'alphabet pour la dernière séquence. Ainsi, une première séquence alphabétique 31 comprend, dans l'ordre, les lettres A, B, C, D ; une deuxième séquence alphabétique 32 comprend, dans l'ordre, les lettres E, F, G, H ; une troisième séquence alphabétique 33 comprend, dans l'ordre, les lettres I, J, K, L, M, N ; une quatrième séquence alphabétique 34 comprend, dans l'ordre, les lettres O, P, Q, R, S, T ; une cinquième séquence alphabétique 35 comprend, dans l'ordre, les lettres U, V, W, X ; et une sixième et dernière séquence alphabétique 36 comprend, dans l'ordre, les lettres Y, Z.

Selon l'invention, les touches alphabétiques 10 de chaque séquence alphabétique 31, 32, 33, 34, 35, 36 sont disposées de sorte que les lettres correspondantes se suivent dans l'ordre alphabétique, par exemple de gauche à droite ou de droite à gauche, et que les touches correspondant aux voyelles A, E, I, O, U et Y soient adjacentes entre elles. De préférence, les touches alphabétiques 10 sont disposées sur trois rangées du clavier 1, chaque rangée comprenant les touches correspondant aux lettres de deux séquences alphabétiques 31, 32 ; 33, 34 ; 35, 36, les lettres d'une des deux séquences alphabétiques 31 ; 33 ; 35 se suivant dans l'ordre alphabétique de gauche à droite, tandis que les lettres de l'autre séquence alphabétique 32 ; 34 ; 36 se suivent dans l'ordre alphabétique de droite à gauche. Ainsi, les touches correspondant aux voyelles se retrouvent disposées sur des touches adjacentes entre elles, réparties sur trois rangées et deux colonnes adjacentes. Encore préférentiellement, les touches alphabétiques 10 sont disposées de telle manière que les séquences alphabétiques 31, 32, 33, 34, 35, 36 sont arrangées entre elles selon l'ordre alphabétique.

Selon une forme d'exécution préférentielle de l'invention illustrée par les figures, les touches alphabétiques 10 du clavier 1 sont disposées, de haut en bas et de gauche à droite, de la manière suivante : une première rangée comprend les touches correspondant aux lettres de la deuxième séquence alphabétique 32 H, G, F, E et les touches correspondant aux lettres de la première séquence alphabétique 31 A, B, C, D; une deuxième rangée comprend les touches correspondant aux lettres de la quatrième séquence alphabétique 34 T, S, R, Q, P, O et les touches correspondant aux lettres de la troisième séquence alphabétique 33 I, J, K, L, M, N ; une troisième rangée comprend les touches correspondant aux lettres de la sixième séquence alphabétique 36 Z, Y et les touches correspondant aux lettres de la cinquième séquence alphabétique 35 U, V, W, X. Les touches correspondant aux voyelles sont ainsi regroupées sur une matrice de trois rangées et deux colonnes située sensiblement au centre de l'ensemble formé par les touches alphabétiques 10. Si le clavier 1 comprend des touches supplémentaires 2, elles sont de préférence disposées autour de l'ensemble formé par les touches alphabétiques 10.

Cette disposition préférentielle des touches alphabétiques 10 permet une répartition régulière des consonnes autour d'un groupe central formé par les voyelles, tout en respectant l'ordre alphabétique. La répartition des touches alphabétiques 10 est symétrique aussi bien horizontalement que verticalement par rapport à des axes de symétries correspondants passant par le centre du groupe formé par les touches correspondant aux voyelles, s'il est fait abstraction du fait que la dernière séquence alphabétique 36 ne comprend que deux lettres au lieu de quatre que comprennent chacune des première, deuxième et cinquième séquences 31, 32, 35.

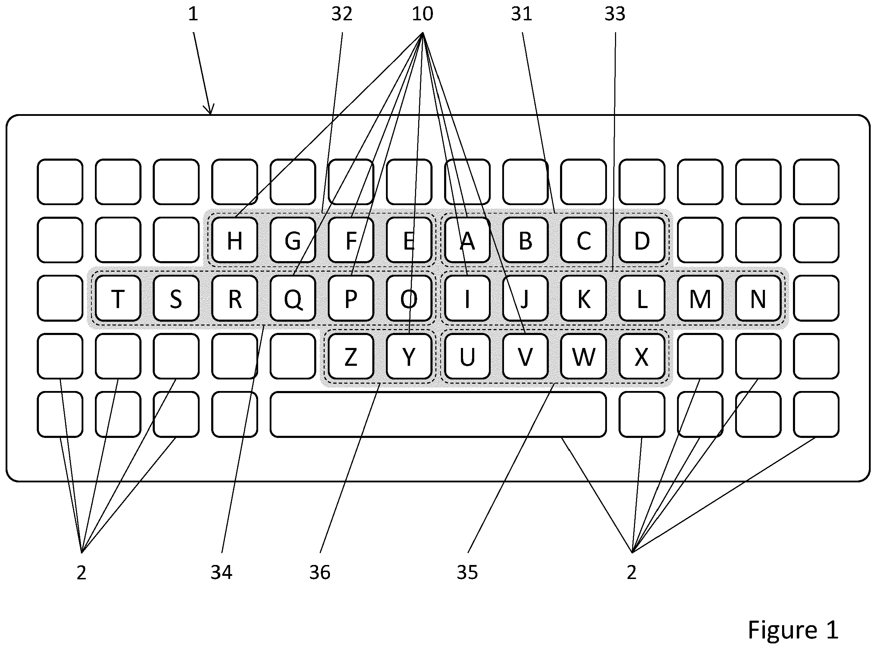

Selon la variante illustrée à titre d'exemple à la figure 1, le clavier 1 est un clavier matriciel dont les touches sont alignées en rangées et colonnes rectilignes.

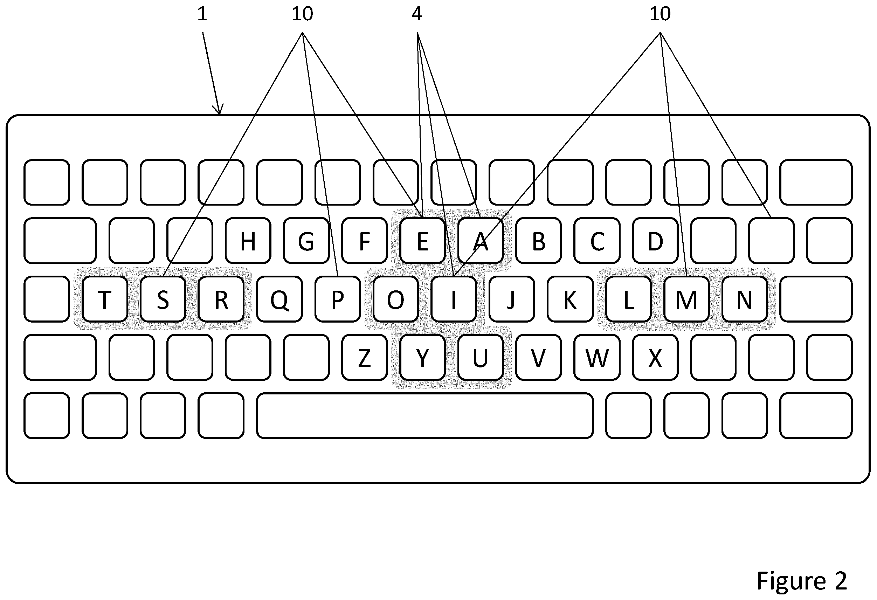

La figure 2 illustre de manière schématique une autre variante du clavier 1 selon la forme d'exécution préférentielle de l'invention, dans lequel les touches sont disposées en quinconce, comme cela est souvent le cas par exemple pour les claviers d'ordinateur. Les colonnes du clavier 1 sont alors formées de touches légèrement décalées horizontalement dans une direction ou dans l'autre à chaque rangée. La disposition des touches alphabétiques 10 sur le clavier 1 reste cependant la même que dans l'exemple illustré à la figure 1. Selon la forme d'exécution illustrée à titre d'exemple illustratif mais aucunement limitatif, les touches de la deuxième rangée comprenant des touches alphabétiques 10 sont décalées légèrement vers la gauche par rapport aux touches des première et troisième rangées. Il est bien entendu envisageable dans le cadre de l'invention de former le clavier en quinconce en décalant les touches de la deuxième rangée vers la droite.

Un avantage de la disposition des touches alphabétiques 10 selon l'invention est que les touches correspondant aux voyelles 4 sont regroupées sur un groupe de touches adjacentes entre elles et que les touches correspondant aux consonnes sont arrangées par ordre alphabétique à la suite de chaque voyelle. Cela permet à un utilisateur familier avec l'alphabet latin de retrouver facilement et rapidement les lettres au cours de la frappe. Une étude a montré par ailleurs que la disposition des touches alphabétiques 10 selon l'invention facilite l'apprentissage de la frappe rapide par rapport aux dispositions usuelles, en particulier pour les néo-apprenants.

Selon la forme d'exécution préférentielle de l'invention illustrée par les figures, les touches alphabétiques 10 sont disposées sur trois rangées du clavier alphabétique 1. Les six touches correspondant aux voyelles 4 sont regroupées sur deux colonnes et trois rangées au centre de l'ensemble formé par les touches alphabétiques 10. Les séquences alphabétiques sont par ailleurs disposées, de droite à gauche et de haut en bas, dans l'ordre alphabétique. L'ensemble des touches alphabétiques 10 se retrouvent ainsi disposées dans un ordre qui a un sens du point de vue alphabétique et qui est par conséquent immédiatement compréhensible et reconnaissable par un utilisateur, même inexpérimenté. Par ailleurs, les lettres LMN et RST, qui sont des consonnes dont la fréquence d'utilisation est relativement élevée en français et dans plusieurs langues européennes, sont disposées aux extrémités de la deuxième rangée, la rangée du milieu, dans des positions les rendant facilement repérables et accessibles par les majeurs, annulaires et/ou auriculaires d'un utilisateur du clavier 1.

La disposition des touches alphabétiques 10 selon l'invention permet de regrouper, de préférence au centre du clavier 1, les voyelles, qui figurent parmi les lettres les plus utilisées statistiquement dans la langue française et dans beaucoup de langues européennes utilisant l'alphabet latin. En effet, les voyelles A, E, I, O, U, Y représentent environ 44% de la fréquence d'apparition dans la langue française. Par ailleurs, les lettres T, S, R et L, M, N, qui totalisent environ respectivement 16% et 27% de fréquence d'apparition sont également regroupées en deux groupes de trois lettres facilement repérables, puisqu'ils sont en fin de leur séquence alphabétique respective. Ces douze lettres facilement repérables de par leur position comprennent les dix lettres apparaissant le plus fréquemment dans la langue française qui sont les lettres E, A, I, S, N, R, T, O, L et U, leur classement par fréquence d'apparition décroissante variant légèrement selon les sources. Par ailleurs, la lettre M qui fait également partie de ces douze lettres facilement repérables est généralement considérée comme la douzième ou la treizième lettre la plus utilisée en français. La disposition des touches alphabétiques 10 selon l'invention permet donc de mettre en évidence les lettres les plus fréquemment utilisées en français et facilite ainsi leur repérage.

De plus, selon la disposition préférentielle illustrée par les figures, les douze lettres A, E, I, O, U, Y, T, S, R, L, M, N sont réparties de telle manière que la somme des probabilités d'apparition dans la langue française pour les six lettres disposées sur la moitié gauche du groupe formé par les touches alphabétiques 10, soit E, O, Y, T, S, R, qui est d'environ 45%, est sensiblement égale à la somme des probabilités d'apparition pour les six lettres A, I, U, L, M, N disposées sur la moitié gauche de ce groupe, qui est d'environ 42%. Ainsi, un utilisateur écrivant en français des deux mains sollicitera ses deux mains de manière pratiquement équitable.

Dans le cas d'un clavier virtuel dans lequel un utilisateur navigue par exemple sur un écran à l'aide d'un curseur actionné par un joystick, une molette ou tout autre interface appropriée pour sélectionner les touches les unes après les autres, la disposition des touches alphabétiques selon l'invention présente l'avantage de minimiser les longs déplacements du curseur entre les sélections de deux lettres consécutives, facilitant ainsi l'introduction de mots au clavier. En effet, grâce à la disposition des touches selon l'invention, le curseur est ramené au centre du clavier 1 à chaque fois qu'une voyelle doit être sélectionnée. La distance entre le groupe des touches correspondant aux voyelles 4 et la consonne la plus éloignée, par exemple T ou N, correspond au plus à la moitié de la longueur maximale du groupe formé par les touches alphabétiques 10. Les distances entre chaque voyelle et les différentes consonnes sont donc optimales dans le respect de la disposition alphabétique des lettres. La disposition selon l'invention permet ainsi de minimiser les déplacements du curseur lors de la sélection successive de voyelles et de consonnes, qui se suivent généralement dans la plupart des mots.

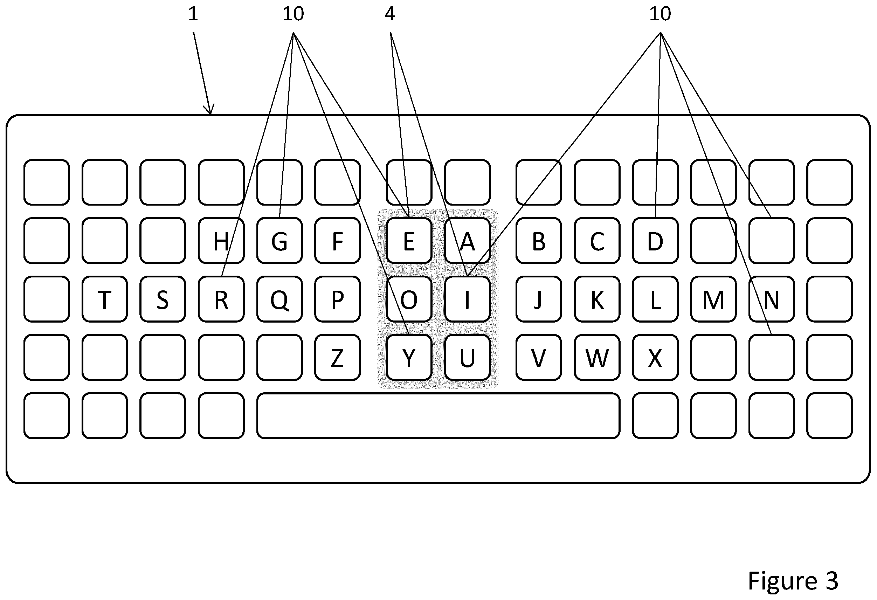

La figure 3 représente une autre variante du clavier 1 de la figure 1 dans lequel les touches correspondant aux voyelles 4 sont espacées des autres touches alphabétiques 10 adjacentes afin de faciliter encore leur repérage par un utilisateur du clavier 1. Cela permet une meilleure mémorisation de la position des lettres, facilitant ainsi l'apprentissage de l'utilisation du clavier 1 par un utilisateur inexpérimenté. Cela permet également une meilleure reconnaissance des touches à des utilisateurs mal-voyants, par exemple, qui repèrent facilement le groupe des voyelles grâce à l'espace entre les touches de ce groupe et les autres touches alphabétiques 10 du clavier 1.

D'autres géométries de clavier que celles représentées dans les figures sont possibles dans le cadre de l'invention, tout en gardant la disposition des touches alphabétiques selon l'invention, en particulier en conservant la disposition des lettres en séquences alphabétiques commençant chacune par une des voyelles de l'alphabet, les touches correspondant aux voyelles étant adjacentes les unes des autres. Le clavier peut par exemple être configuré en deux parties formant un angle entre elles, une partie étant destinée à être utilisée avec la main gauche d'un utilisateur et l'autre partie étant destinée à être utilisée avec la main droite.

Dans le cas de claviers virtuels, en particulier, mais pas uniquement, les séquences alphabétiques peuvent par exemple être disposées en étoile ou selon toute autre disposition géométrique appropriée des touches.

## Revendications

1. Clavier alphabétique (1) comprenant vingt-six touches alphabétiques (10), chaque touche alphabétique (10) correspondant à une lettre de l'alphabet latin de base, dans lequel les touches alphabétiques (10) sont arrangées en six séquences alphabétiques (31, 32, 33, 34, 35, 36), chaque séquence alphabétique (31, 32, 33, 34, 35, 36) commençant par une voyelle (A, E, I, O, U, Y) de l'alphabet latin, suivie, dans l'ordre alphabétique, des consonnes séparant la voyelle initiale de la prochaine voyelle de l'alphabet ou de la fin de l'alphabet, les touches alphabétiques (10) correspondant aux voyelles étant disposées sur des touches adjacentes entre elles, les séquences alphabétiques étant réparties selon l'ordre alphabétique,
le clavier étant **caractérisé en ce que**
les vingt-six touches alphabétiques (10) sont disposées sur trois rangées de touches adjacentes du clavier (1), chaque rangée de touche des trois rangées de touches adjacentes comprenant les touches alphabétiques (10) de deux séquences alphabétiques (31, 32 ; 33, 34 ; 35, 36).

2. Clavier alphabétique (1) selon la revendication précédente, les touches alphabétiques (10) correspondant aux voyelles étant disposées sensiblement au centre du clavier alphabétique (1).

3. Clavier alphabétique (1) selon l'une des revendications précédentes, dans lequel les touches alphabétiques (10) sont disposées :
- sur une première rangée des trois rangées de touches selon l'ordre des lettres suivant : H, G, F, E, A, B, C, D ;
- sur une deuxième rangée des trois rangées de touches immédiatement sous la première rangée selon l'ordre suivant : T, S, R, Q, P, O, I, J, K, L, M, N ;
- sur une troisième rangée des trois rangées de touches immédiatement sous la deuxième rangée selon l'ordre suivant : Z, Y, U, V, W, X.

4. Clavier alphabétique (1) selon l'une des revendications précédentes, comprenant en outre des touches supplémentaires (4) correspondant à des chiffres, des caractères spéciaux, des commandes et/ou des éléments de ponctuation.

5. Clavier alphabétique (1) selon l'une des revendications précédentes, dans lequel les touches sont agencées en quinconce.

6. Clavier alphabétique (1) selon l'une des revendications précédentes, dans lequel les touches sont agencées en matrice.

7. Clavier alphabétique (1) selon l'une des revendications précédentes, dans lequel les touches correspondant aux voyelles (4) sont espacées des autres touches alphabétiques.

8. Clavier alphabétique (1) selon l'une des revendications précédentes, dans lequel le clavier alphabétique (1) est un clavier d'ordinateur physique.

9. Clavier alphabétique (1) selon l'une des revendications précédentes, dans lequel le clavier alphabétique (1) est un clavier virtuel.

## Patentansprüche

1. Alphabetische Tastatur (1), die sechsundzwanzig alphabetische Tasten (10) umfasst, wobei jede alphabetische Taste (10) einem Buchstaben des lateinischen Grundalphabets entspricht, wobei die alphabetischen Tasten (10) in sechs alphabetischen Folgen (31, 32, 33, 34, 35, 36) eingerichtet sind, wobei jede alphabetische Folge (31, 32, 34, 35, 36) mit einem Vokal (A, E, I, O, U, Y) des lateinischen Alphabets beginnt, gefolgt, in alphabetischer Reihenfolge, von den Konsonanten, die den Anfangsvokal von dem nächsten Vokal des Alphabets oder dem Ende des Alphabets trennen, wobei die alphabetischen Tasten (10), die den Vokalen entsprechen, auf einander benachbarten Tasten angeordnet sind, wobei die alphabetischen Folgen in alphabetischer Reihenfolge verteilt sind, wobei die Tastatur **dadurch gekennzeichnet ist, dass** die sechsundzwanzig alphabetischen Tasten (10) in drei Reihen von benachbarten Tasten der Tastatur (1) angeordnet sind, wobei jede Tastenreihe der drei benachbarten Tastenreihen die alphabetischen Tasten (10) zweier alphabetischer Folgen (31, 32; 33, 34; 35, 36) umfasst.

2. Alphabetische Tastatur (1) nach dem vorhergehenden Anspruch, wobei die alphabetischen Tasten (10), die den Vokalen entsprechen, im Wesentlichen in der Mitte der alphabetischen Tastatur (1) angeordnet sind.

3. Alphabetische Tastatur (1) nach einem der vorhergehenden Ansprüche, wobei die alphabetischen Tasten (10) angeordnet sind:
- in einer ersten Reihe der drei Tastenreihen in der folgenden Reihenfolge der Buchstaben: H, G, F, E, A, B, C, D;
- in einer zweiten Reihe der drei Tastenreihen unmittelbar unter der ersten Reihe in der folgenden Reihenfolge: T, S, R, Q, P, O, I, J, K, L, M, N;
- in einer dritten Reihe der drei Tastenreihen unmittelbar unter der zweiten Reihe in der folgenden Reihenfolge: Z, Y, U, V, W, X.

4. Alphabetische Tastatur (1) nach einem der vorhergehenden Ansprüche, ferner umfassend zusätzliche Tasten (4), die Zahlen, Sonderzeichen, Befehlen und/oder Zeichensetzungselementen entsprechen.

5. Alphabetische Tastatur (1) nach einem der vorhergehenden Ansprüche, wobei die Tasten versetzt angeordnet sind.

6. Alphabetische Tastatur (1) nach einem der vorhergehenden Ansprüche, wobei die Tasten in einer Matrix angeordnet sind.

7. Alphabetische Tastatur (1) nach einem der vorhergehenden Ansprüche, wobei die Tasten, die den Vokalen (4) entsprechen, von den anderen alphabetischen Tasten beabstandet sind.

8. Alphabetische Tastatur (1) nach einem der vorhergehenden Ansprüche, wobei die alphabetische Tastatur (1) eine Tastatur eines physischen Computers ist.

9. Alphabetische Tastatur (1) nach einem der vorhergehenden Ansprüche, wobei die alphabetische Tastatur (1) eine virtuelle Tastatur ist.

## Claims

1. Alphabetic keyboard (1) comprising twenty-six alphabetic keys (10), each alphabetic key (10) corresponding to a letter of the basic Latin alphabet, in which the alphabetic keys (10) are arranged in six alphabetical sequences (31, 32, 33, 34, 35, 36), each alphabetical sequence (31, 32, 33, 34, 35, 36) beginning with a vowel (A, E, I, O, U, Y) of the Latin alphabet followed, in alphabetical order, by the consonants separating the initial vowel from the next vowel of the alphabet or from the end of the alphabet, the alphabetic keys (10) corresponding to the vowels being arranged on mutually adjacent keys, the alphabetical sequences being distributed in alphabetical order, the keyboard being **characterised in that** the twenty-six alphabetic keys (10) are arranged in three rows of adjacent keys of the keyboard (1), each key row of the three rows of adjacent keys comprising the alphabetic keys (10) of two alphabetical sequences (31, 32; 33, 34; 35, 36).

2. Alphabetic keyboard (1) as claimed in the preceding claim, the alphabetic keys (10) corresponding to the vowels being arranged substantially in the centre of the alphabetic keyboard (1).

3. Alphabetic keyboard (1) as claimed in any one of the preceding claims, wherein the alphabetic keys (10) are arranged:
- in a first row of the three key rows in the following order of letters: H, G, F, E, A, B, C, D;
- in a second row of the three key rows immediately beneath the first row in the following order: T, S, R, Q, P, O, I, J, K, L, M, N;
- in a third row of the three key rows immediately beneath the second row in the following order: Z, Y, U, V, W, X.

4. Alphabetic keyboard (1) as claimed in any one of the preceding claims, further comprising additional keys (4) corresponding to numbers, special characters, commands and/or punctuation marks.

5. Alphabetic keyboard (1) as claimed in any one of the preceding claims, wherein the keys are arranged in staggered rows.

6. Alphabetic keyboard (1) as claimed in any one of the preceding claims, wherein the keys are arranged in a matrix.

7. Alphabetic keyboard (1) as claimed in any one of the preceding claims, wherein the keys corresponding to the vowels (4) are spaced apart from the other alphabetic keys.

8. Alphabetic keyboard (1) as claimed in any one of the preceding claims, wherein the alphabetic keyboard (1) is a physical computer keyboard.

9. Alphabetic keyboard (1) as claimed in any one of the preceding claims, wherein the alphabetic keyboard (1) is a virtual keyboard.
